# EUROPÄISCHE PATENTSCHRIFT

(11) **EP 1 367 283 B1**
(45) Veröffentlichungstag und Bekanntmachung des Hinweises auf die Patenterteilung: **19.07.2006**
(21) Anmeldenummer: 03007297.9
(22) Anmeldetag: 01.04.2003
(51) Int. Cl.: F16D 48/02, F16D 13/58

(54) **Kupplungsbetätigungseinrichtung**
Clutch actuator
Dispositif d'actionnement d'un embrayage

(30) Priorität: 29.05.2002 DE 10224106
(43) Veröffentlichungstag der Anmeldung: 03.12.2003
(73) Patentinhaber: ZF Sachs AG, 97424 Schweinfurt (DE)
(72) Erfinder: Steinel, Klaus, Dipl.-Ing., 97493 Bergrheinfeld (DE); Förster, Bernd, Dipl.-Ing., 97456 Dittelbrunn (DE); Voit, Herbert, Dipl.-Ing.(FH), 97422 Schweinfurt (DE)

(56) Entgegenhaltungen:
- WO-A-03/019026
- DE-A- 19 716 600
- US-A- 4 344 516
- US-A- 4 889 217
- CROSER, P. EBEL, F.: "Pneumatik Grundstufe" 1997 , SPRINGER-VERLAG , DEUTSCHLAND XP002252959 620893 * Seite 74 - Seite 75; Abbildungen 5.13-5.15,5.25 *
- PROF. DR.-ING DIETMAR FINDESEIN, DIPL.-ING. FRANZ FINDESEIN: "Ölhydraulik" 1984 , SPRINGER-VERLAG , DEUTSCHLAND XP002252960 544658 * Abbildungen 4-48 *

## Beschreibung

Die Erfindung betrifft eine Kupplungsbetätigungseinrichtung gemäß dem Oberbegriff von Patentanspruch 1.

Aus der DE 29 23 487 A1 ist eine Betätigungseinrichtung für eine Kupplung bekannt, bei der ein Kolben in Verbindung mit einem Zylinder, der mit einem Druckmedium gefüllt ist, ein Kupplung öffnet. Bei einer Schließbewegung der Kupplung wird der Kolben von einer Feder als Teil der Betätigungseinrichtung in seine Ausgangsstellung zurück bewegt. Die Rückstellbewegung erfolgt zwangsläufig wegabhängig. Mit zunehmendem Rückstellweg nimmt die Kraft der Rückstellfeder ab. Folglich muss die Kraft der Rückstellfeder derart bemessen sein, das auf jeden Fall die Ausgangsstellung des Kolbens erreicht werden kann. Der Kraftüberschuss der Feder kann die Bauteile der Betätigungseinrichtung ziemlich beanspruchen, so dass eine entsprechend solide Dimensionierung der Bauteile erforderlich ist.

Die DE 33 26 119 C1 beschreibt, dass man auch mehrere Kolben-Zylindereinheiten für die Ausrückbewegung einer Kupplung verwenden kann.

Wie aus der DE 197 16 600 A1 bekannt ist, kann man eine Betätigungseinrichtung mit einem axial beweglichen Kolben innerhalb eines mit einem Druckmedium willkürlich füllbaren Zylinders sowohl für eine Kupplungsbetätigung mit einer Zugkraft wie auch mit einer Druckkraft einsetzen.

Die DE 197 00 935 A1 offenbart eine Betätigungseinrichtung für eine schaltbare Kupplung, wobei ein elektrischer Aktuator einen Geberzylinder ansteuert, der wiederum auf einen Nehmerzylinder wirkt. U. a. wird dargelegt, dass durch die Kombination des Aktuators mit dem Geber- und Nehmerzylinder auch aktiv Öffnungs- und Schließkräfte auf die Kupplung wirken können. Der Geber- und der Nehmerzylinder sind räumlich getrennt angeordnet. Das aus dem Geberzylinder verdrängte Medium wirkt auf den Kolben in Ausfahrrichtung des Nehmerzylinders. Sofern als Medium Druckluft eingesetzt wird, können vom Nehmerzylinder keine Kräfte in Einfahrrichtung des Kolbens ausgeübt werden, wenn der Kolben des Geberzylinders ausfährt. Druckluft ist ein kompressibles Medium, so dass keine zwangsläufige Abhängigkeit zwischen dem einfahrenden Kolben des Nehmerzylinders und des ausfahrenden Kolbens des Geberzylinders besteht. Lediglich bei einem flüssigen Druckmedium könnte der Effekt erreicht werden.

Die US 4 889 217 beschreibt eine schaltbare Kupplung mit einer doppeltwirkenden Betätigungseinrichtung. Die Betätigungseinrichtung umfasst einen Zylinder, in dem ein Kolben mit zwei druckbeaufschlagten Flächen eine Arbeitsbewegung ausführt, die auf die Kupplung übertragen wird. An der Betätigungseinrichtung sind zwei parallele Übertragungsringe ausgeführt, zwischen denen innere Hebelenden der Kupplung eingreifen, um die axiale Arbeitsbewegung der Betätigungseinrichtung in eine Schaltbewegung der Kupplung umzusetzen.

Die nachveröffentlichte WO03 019026 betrifft eine schaltbare Kupplung in Verbindung mit einem doppeltwirkenden Betätigungseinrichtung. Dabei wird der Vorteil eines Hilfsraums innerhalb der doppeltwirkenden Betätigungseinrichtung hervorgehoben, ohne jedoch auf konstruktive Details der Verbindung zwischen der Kupplung und der Betätigungseinrichtung einzugehen.

Die US 4,863,005 beschreibt insbesondere in der Variante nach Fig. 6 eine Betätigungseinrichtung mit einem einseitigen Überträgungsring, an dem sich Hebel einer Membranfeder abstützen. Eine zusätzliche Feder sorgt für eine Vorspannung zwischen den Hebeln und dem Übertragungsring.

Aus der US 4,967,891 ist eine Betätigungseinrichtung für eine gezogene Kupplungsbewegung bekannt. Zwischen zwei Übertragungsringen sind spielfrei Hebel einer Membran feder verspannt. Die Übertragungsringe werden von einem Sicherungsring axial zur Betätigungseinrichtung fixiert und sind nur zur Montage kraftfrei relativ zur Betätigungseindchtung verschiebbar.

Aus der US 43 445 16 (Kolb) sind die axial gegen eine Feder verschiebbaren Übertragungsringe bekannt. Sie werden durch einen Bügel axial gesichert.

Aufgabe der vorliegenden Erfindung ist es ein Betätigungseinrichtung für eine Kupplung zu realisieren, die auch bei der Verwendung von Druckluft als Druckmedium aktiv Öffnungs- und Schließkräfte auf die Kupplung ausüben kann.

Erfindungsgemäß wird die Aufgabe durch die Merkmale des Patentanspruchs 1 gelöst.

Aufgrund der Druckversorgung an mindestens zwei Kolbenflächen werden unabhängig von der Kompressionsfähigkeit des Druckmediums definierte Kräfte übertragen. Man kann die Betätigungseinrichtung mit einem definierten Überdruck betreiben, um z. B. Reibungseffekte an den bewegten Teilen zu kompensieren.

Die axiale Verschiebbarkeit der Übertragungsring erleichtert dabei wesentlich die Montage der Kupplung mit der Betätigungseinrichtung.

Im Hinblick auf eine kompakte Lösung sind die Kolbenflächen an einem gemeinsamen Kolben angeordnet. Generell besteht jedoch auch die Möglichkeit, dass die Kolbenflächen an räumlich getrennten Kolben ausgeführt sind.

Des weiteren sind die beiden Arbeitsräume in einem gemeinsamen Zylinder angeordnet. Damit kann ein doppeltwirkender Zylinder eingesetzt werden.

Zur Ansteuerung der Betriebsbewegung der Kolbenflächen ist den beiden Arbeitsräumen mindestens ein Strömungsventil zugeordnet. Alternativ besteht die Möglichkeit, dass jedem der beiden Arbeitsräume ein separat ansteuerbares Strömungsventil zugeordnet ist. Beim Öffnen oder Schließen der Kupplung müssen Massen bewegt werden, deren Trägheit für die Lebensdauer der Betätigungseinrichtung nachteilig ist. Bei einer gezielten Druckmediumzu- und Abfuhr können die Betriebsbewegungen der Kolbenflächen gezielt abgebremst werden, indem man z. B. den Abströmquerschnitt oder die Zeiten für die Durchlass-Stellung des Ventil für den sich verkleinernden Arbeitsraum gezielt reduziert, um einen Gegendruck in diesem Arbeitsraum auszunutzen.

Deshalb ist es sinnvoll, dass in mindestens einem der beiden Arbeitsräume eine Drucksensierung ausgeführt ist. Alternativ oder in Kombination kann bei der Betätigungseinrichtung der Weg der Kolbenfläche während einer Betriebsbewegung von einer Wegsensierungseinrichtung erfasst werden. Damit lässt sich unabhängig vom Kompressionsverhalten des Betriebsmediums innerhalb des Arbeitsraums die Position der Kolbenfläche und damit auch der momentane Betriebszustand der schaltbaren Kupplung erfassen.

Grundsätzlich besteht die Möglichkeit, dass mindestens einer der Arbeitsräume exzentrisch zu einer Getriebewelle angeordnet ist. Es ist jedoch genauso möglich, dass mindestens einer der Arbeitsräume konzentrisch zu einer Getriebewelle angeordnet ist.

Für die Ausgestaltung der Hebel bestehen grundsätzlich mindestens zwei Möglichkeiten. So können die Hebel von einer Federkraft in Schließrichtung der Kupplung vorgespannt sein. Dazu kann man separate Federn einsetzen, die auf die Hebelwirken oder man verwendet Hebel mit einer eigenen Federwirkung, wie z. B. bei Membranfedern.

Man kann auch vorsehen, dass die Hebel als kraftfreie Übertragungsmittel ausgeführt sind. In diesem Fall muss die Schließkraft der Kupplung vollständig von der Kolbenfläche in Verbindung dem Druckmedium in einem Arbeitsraum erzeugt werden. Die Hebel sind dann als starre Schwenkhebel einsetzbar.

Anhand der folgenden Figurenbeschreibung soll die Erfindung näher erläutert werden. Es zeigt:
- Fig. 1: Prinzipdarstellung der schaltbaren Kupplung mit einer erfindungsgemäßen Betätigungeinrichtung
- Fig. 2: Alternatives Strömungsventil
- Fig. 3: Alternative Anordung des Übertragungselements
- Fig. 4: Detaildarstellung von Übertragungsringen an den Hebeln

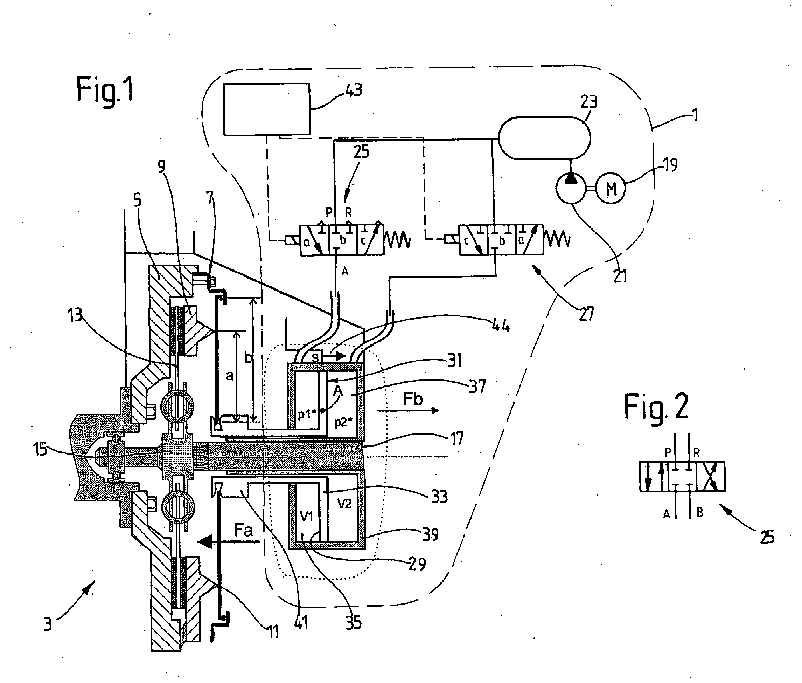

Die Figur 1 zeigt die Kombination einer Betätigungseinrichtung 1 mit einer willkürlich schaltbaren Kupplung 3. Beispielhaft verfügt die Kupplung über ein motorseitig verbundenes Schwungrad 5, an dem ein Gehäuse 7 axial und verdrehfest angeordnet ist. Das Gehäuse wiederum trägt eine axial beweglich gelagerte Anpressplatte 9, die mit einer Anzahl von Hebeln 11 in Wirkverbindung steht. Zwischen der Anpressplatte und dem Schwungrad ist eine Kupplungsscheibe 13 angeordnet, deren Nabe 15 auf einer Getriebewelle 17 axial verschiebbar geführt ist. Bei geschlossener Kupplung, wie dargestellt, erfolgt der Kraftfluss ausgehend von einer Kurbelwelle des Motors auf das Schwungrad und weiter über die zwischen dem Schwungrad und der Anpressplatte vorspannbare Kupplungsscheibe in Verbindung mit der Nabe auf die Getriebewelle. Die konstruktive Ausgestaltung der Kupplung ist nur beispielhaft zu verstehen. Man kann auch abweichende Kupplungstypen, z. B. Mehrscheibenkupplungen oder auch sogenannte Zweimassenschwungräder einsetzen.

Die Betätigungseinrichtung 1 umfasst eine Antriebseinrichtung 19 für eine Druckversorgungseinrichtung 21, die an einen Druckmediumspeicher 23 angeschlossen ist. Als Druckmedium ist bevorzugt Luft vorgesehen, jedoch ist prinzipiell auch ein hydraulisches Fluid verwendbar. Des weiteren schließt sich mindestens ein Strömungsventil 25; 27 an, das die Druckversorgung auf mindestens zwei Kolbenflächen 29; 31 wirksam werden lässt, die eine gegensinnige Betriebsbewegung ausüben. Die Kolbenflächen sind in diesem Ausführungsbeispiel an einem gemeinsamen Kolben 33 realisiert. Es können jedoch auch getrennte Kolben verwendet werden. Der Kolben trennt zwei Arbeitsräume 35; 37 eines gemeinsamen Zylinders 39, wobei beide beitsräume über das mindestens eine Strömungsventil 35; 37 mit der Druckversorgungseinrichtung 21 verbunden oder von ihr getrennt werden können. In diesem Fall sind zwei Strömungsventile vorgesehen, deren Ventilstellung von einer gemeinsamen Steuereinrichtung bestimmt wird. Der Anschluss P ist jeweils mit der Druckversorgungseinrichtung, der Anschluss R mit der Atmosphäre und der Anschluss A mit dem jeweiligen Arbeitsraum verbunden. Alternativ kann man auch ein einzelnes Strömungsventil verwenden, dass an der Auslass-Seite über die Anschlüsse A; B verfügt, wie in der Fig. 2 dargestellt ist.

Der Zylinder 39 ist getriebeseitig und damit auch zum Motor ortsfest angeordnet, so dass eine vom Kolben über ein Übertragungselement 41 auf die Hebel 11 wirksame Bewegung auf die Anpressplatte 9 übertragen wird. Grundsätzlich ist es möglich, dass die Hebel eine Vorspannkraft auf die Anpressplatte ausüben und die schaltbare Kupplung als Baugruppe unabhängig von der Betätigungseinrichtung stets mit einem übertragbaren Antriebsmoment des Motors verwendbar ist. Der Druck im getriebeseitigen Arbeitsraum 37 kann das übertragbare Motormoment zusätzlich zu den vorgespannten Hebeln steigern. Man kann aber auch vorspannlose Hebel einsetzen, so dass die Kupplung ausschließlich von dem momentanen Druck im getriebeseitigen Arbeitsraum in die Schließstellung bewegt und vorgespannt wird.

Ausgehend von der geschlossenen Stellung der schaltbaren Kupplung 3 wird bei einer Öffnungsbewegung der Kupplung der motorseitige Arbeitsraum 35 und damit die Kolbenfläche 29 über das Strömungsventil 25 mit Druckmedium in Form eines Gases oder auch eines Hydraulikmediums beaufschlagt. Gleichzeitig sorgt eine Steuereinrichtung 43 dafür, dass das zweite Strömungsventil 27 den Anschluss B mit dem Anschluss R verbindet. Aufgrund des Differenzdrucks zwischen den beiden beitsräumen 35; 37, der auf die kreisringförmige Kolbenfläche 29 wirkt, verschiebt sich das Übertragungselement 41 in Richtung des Getriebes. Das im getriebeseitigen Arbeitsraum 37 enthaltene Druckmedium wird über den Anschluss R des Strömungsventils verdrängt. Synchron werden die Hebel 11 bewegt und die Vorspannkraft der Anpressplatte auf die Kupplungsscheibe 13 reduziert sich soweit, dass kein Motormoment auf das Getriebe übertragen wird. Dazu wird die Anpressplatte über nicht dargestellte Federn in Richtung der Hebel vorgespannt, oder die Hebel sind mit der Anpressplatte gelenkig verbunden.

Am Ende der Ausrückbewegung des Übertragungselements 41 besteht die Möglichkeit, dass das zweite Strömungsventil 27 schon in die eingezeichnete Blockierstellung bewegt wird, aber das erste Strömungsventil 25 den motorseitigen Arbeitsraum 35 noch mit Druckmedium versorgt. Dadurch reduziert sich das Druckgefälle zwischen den beiden Arbeitsräumen, wodurch ein Bremseffekt auf das Übertragungselement ausgeübt wird. Dazu sind in den beiden Arbeitsräumen Drucksensoren angeordnet, um den Bremseffekt gezielt steuern zu können. Alternativ oder in Kombination kann auch eine Wegsensierungseinrichtung 44 eingesetzt werden.

Um die schaltbare Kupplung wieder zu schließen, werden beide Strömungsventile 25; 27 in die Schaltstellung c bewegt. Nun verfügt der getriebeseitige Arbeitsraum 37 über das höhere Druckniveau. Es kann ebenfalls durch eine kombinierte Ansteuerung beider Ventile eine Abbremsbewegung auf das Übertragungselement ausgeübt werden, wenn das erste Strömungsventil schon in eine teilblockierte Position fährt, wenn sich das Übertragungselement kurz vor seiner Endlage befindet.

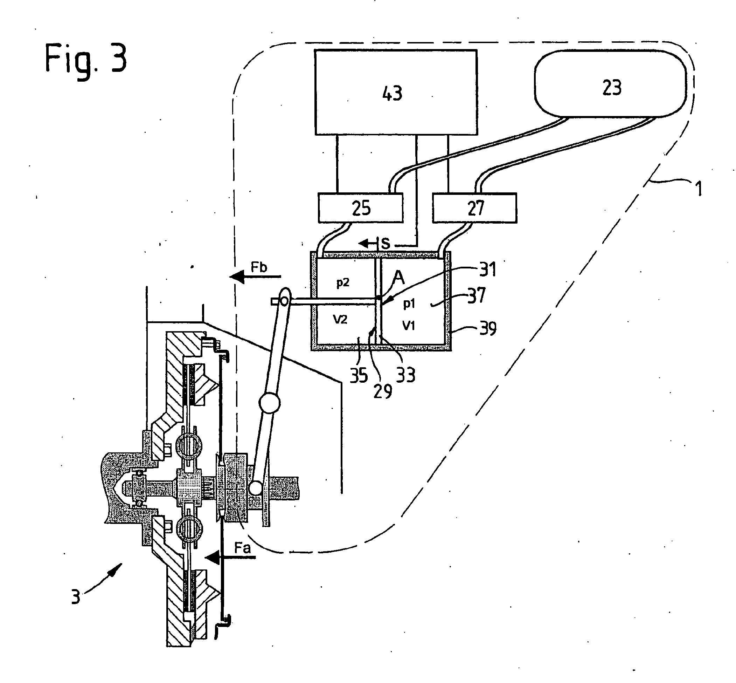

Mit der Figur 3 soll dokumentiert werden, dass das Prinzip der zwei gegensinnig wirksamen Kolbenflächen nicht auf eine konzentrische Anordnung des Zylinders zur Getriebewelle beschränkt ist. Auch bei einer exzentrischen Kraftanbindung über einen Stellhebel auf das Übertragungselement kann die Erfindung genutzt werden.

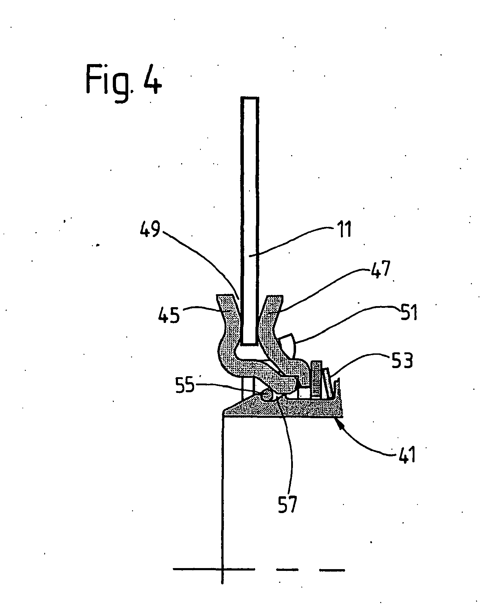

Die Fig. 4 beschränkt sich auf die Darstellung der Verbindung eines Hebels 11 mit dem Übertragungselement. Zwei Übertragungsringe 45; 47 bilden eine umlaufende Nut 49, in die die Enden der Hebel eingeführt werden können. Dazu lenkt man bei der Montage den Hebel bei einer gezogenen Kupplung in Richtung öffnen der Kupplung leicht aus und führt das Übertragungselement mit den beiden Übertragungsringen in den von den Hebeln gebildeten Innenraum. Bei einer synchronen Schließbewegung des Übertragungselements und der Hebel gleiten diese in die Nut. Dafür bilden die Außenränder der Übertragungselemente im Querschnitt eine V-Form. Die beiden Übertragungsringe können miteinander verschweißt sein oder einen Formschluss-Verbindung aufweisen, in dem eine zungenförmige Verlängerung 51 des einen Übertragungsrings 45 den anderen Übertragungsring 47 innenseitig durchgreift.

Wenn der Bauraum für eine Ausrückbewegung des Übertragungselements bei der Montage nicht ausreicht, dann können zusätzlich während der Montage die beiden Übertragungsringe 45; 47 gegen eine Federkraft verschoben werden. Die Federkraft, vorteilhaft von einer Ringfeder 53 erzeugt, drückt die Übertragungsringe gegen eine Haltefläche, die von einem aufspreizbaren Sicherungsring 55 innerhalb einer Haltenut 57 gebildet wird. Damit ist das Übertragungselement in der Lage, Axialkräfte in beide Richtungen und auf den oder die Hebel auszuüben.

## Patentansprüche

1. Betätigungseinrichtung für eine schaltbare Kupplung (3), umfassend eine Druckversorgungseinrichtung (19; 21; 23), die mit einer Kolbenfläche (29; 31) an einem Kolben (33), der in einem Arbeitsraum (35; 37) eine Betriebsbewegung ausübt, in Wirkverbindung steht, wobei der Kolben eine Betätigungskraft auf die schaltbare Kupplung ausübt, und zwei Kolbenflächen (29; 31) mit der Druckversorgungseinrichtung (19; 21; 23) verbunden sind, wobei die Kolbenflächen (29; 31) bei einer Druckversorgung eine gegensinnig gerichtete Betriebsbewegung ausüben und die schaltbare Kupplung (3) eine Anzahl von Hebeln (11) aufweist, die mit einer Anpressplatte (9) der Kupplung in Wirkverbindung stehen, wobei die Hebel wiederum von einem Übertragungselement (41) angesteuert werden, das mit den Kolbenflächen (29; 31) in Wirkverbindung steht, wobei das Übertragungselement (41) Übertragungsringe (45; 47) aufweist, die jeweils in Öffnungs- und in Schließrichtung der Kupplung an den Hebeln (11) angreifen,
**dadurch gekennzeichnet,**
**dass** die Übertragungsringe (45; 47) eine spielfreie Nut (49) für die Hebel (11) bilden und zum Übertragungselement (41) in einem begrenzten Rahmen gegen eine Federkraft einer Feder (53), die sich an der Betätigungseinrichtung (1) abstützt, axial verschiebbar gelagert sind und gegen einen Anschlag positioniert und durch einen zweiten Anschlag (55) axial gesichert werden.

2. Betätigungseinrichtung nach Anspruch 1,
**dadurch gekennzeichnet,**
**dass** die Kolbenflächen (29; 31) an einem gemeinsamen Kolben (33) angeordnet sind

3. Betätigungseinrichtung nach Anspruch 1,
**dadurch gekennzeichnet,**
**dass** die beiden Arbeitsräume (35; 37) in einem gemeinsamen Zylinder (39) angeordnet sind.

4. Betätigungseinrichtung nach Anspruch 3,
**dadurch gekennzeichnet,**
**dass** den beiden Arbeitsräumen (35; 37) mindestens ein Strömungsventil (25; 27) zugeordnet ist.

5. Betätigungseinrichtung nach Anspruch 4,
**dadurch gekennzeichnet,**
**dass** jedem der beiden Arbeitsräume (35; 37) ein separat ansteuerbares Strömungsventil (25; 27) zugeordnet ist.

6. Betätigungseinrichtung nach Anspruch 1,
**dadurch gekennzeichnet,**
**dass** in mindestens einem der beiden Arbeitsräume eine Drucksensierung ausgeführt ist.

7. Betätigungseinrichtung nach Anspruch 1,
**dadurch gekennzeichnet,**
**dass** der Weg der Kolbenfläche (29; 31) während einer Betriebsbewegung von einer Wegsensierungseinrichtung (44) erfasst wird.

8. Betätigungseinrichtung nach Anspruch 1,
**dadurch gekennzeichnet,**
**dass** mindestens einer der Arbeitsräume (35; 37) exzentrisch zu einer Getriebewelle (17) angeordnet ist.

9. Betätigungseinrichtung nach Anspruch 1,
**dadurch gekennzeichnet,**
**dass** mindestens einer der Arbeitsräume (35; 37) konzentrisch zu einer Getriebewelle (17) angeordnet ist.

10. Betätigungseinrichtung nach Anspruch 1,
**dadurch gekennzeichnet,**
**dass** die Hebel (11) von einer Federkraft in Schließrichtung der Kupplung (3) vorgespannt sind.

11. Betätigungseinrichtung nach Anspruch 10,
**dadurch gekennzeichnet,**
**dass** die Hebel (11) als kraftfreie Übertragungsmittel ausgeführt sind.

12. Betätigungseinrichtung nach Anspruch 1,
**dadurch gekennzeichnet,**
**dass** die Haltefläche (55) von einem Sicherungsring gebildet wird.

## Claims

1. Actuation device for a shiftable clutch (3), comprising a pressure supply device (19; 21; 23) which is operatively connected to a piston surface (29; 31) on a piston (33) which executes an operating movement in a working space (35; 37), the piston exerting an actuating force on the shiftable clutch, and two piston surfaces (29; 31) are connected to the pressure supply device (19; 21; 23), the piston surfaces (29; 31) executing an oppositely directed operating movement in the event of a pressure supply, and the shiftable clutch (3) has a number of levers (11) which are operatively connected to a pressure plate (9) of the clutch, the levers being activated, in turn, by a transmission element (41) which is operatively connected to the piston surfaces (29; 31), the transmission element (41) having transmission rings (45; 47) which act on the levers (11) in each case in the opening and the closing direction of the clutch, **characterized in that** the transmission rings (45; 47) form a play-free groove (49) for the levers (11) and are mounted so as to be axially displaceable in relation to the transmission element (41) within a limited scope counter to a spring force of a spring (53) which is supported against the actuation device (1) and are positioned against one stop and are secured axially by means of a second stop (55).

2. Actuation device according to Claim 1, **characterized in that** the piston surfaces (29; 31) are arranged on a common piston (33).

3. Actuation device according to Claim 1, **characterized in that** the two working spaces (35; 37) are arranged in a common cylinder (39).

4. Actuation device according to Claim 3, **characterized in that** the two working spaces (35; 37) are assigned at least one flow valve (25; 27).

5. Actuation device according to Claim 4, **characterized in that** each of the two working spaces (35; 37) is assigned a separately activatable flow valve (25; 27).

6. Actuation device according to Claim 1, **characterized in that** pressure sensing is carried out in at least one of the two working spaces.

7. Actuation device according to Claim 1, **characterized in that** the travel of the piston surface (29; 31) during an operating movement is detected by a travel sensing device (44).

8. Actuation device according to Claim 1,
**characterized in that** at least one of the working spaces (35; 37) is arranged eccentrically to a transmission shaft (17).

9. Actuation device according to Claim 1, **characterized in that** at least one of the working spaces (35; 37) is arranged concentrically to a transmission shaft (17).

10. Actuation device according to Claim 1, **characterized in that** the levers (11) are prestressed in the closing direction of the clutch (3) by a spring force.

11. Actuation device according to Claim 10, **characterized in that** the levers (11) are designed as force-free transmission means.

12. Actuation device according to Claim 1, **characterized in that** the holding surface (55) is formed by a securing ring.

## Revendications

1. Dispositif d'actionnement d'un embrayage (3), comprenant un dispositif d'alimentation en pression (19 ; 21 ; 23), qui est en liaison fonctionnelle avec une surface de piston (29 ; 31) sur un piston (33), qui exerce dans une chambre de travail (35 ; 37) un mouvement de fonctionnement, le piston exerçant une force d'actionnement sur l'embrayage, et deux surfaces de piston (29 ; 31) étant connectées au dispositif d'alimentation en pression (19 ; 21 ; 23), les surfaces de piston (29 ; 31) exerçant lors de l'alimentation en pression un mouvement de fonctionnement orienté en sens inverse et l'embrayage (3) présentant une pluralité de leviers (11) qui sont en liaison fonctionnelle avec un plateau de pression (9) de l'embrayage, les leviers étant à leur tour commandés par un élément de transfert (41), qui est en liaison fonctionnelle avec les surfaces du piston (29 ; 31), l'élément de transfert (41) présentant des bagues de transfert (45 ; 47) qui viennent en prise à chaque fois dans la direction d'ouverture et dans la direction de fermeture de l'embrayage avec les leviers (11),
**caractérisé en ce que**
les bagues de transfert (45 ; 47) forment une rainure sans jeu (49) pour les leviers (11) et sont montées de manière déplaçable axialement par rapport à l'élément de transfert (41) dans un cadre limité à l'encontre d'une force de ressort d'un ressort (53) qui s'appuie contre le dispositif d'actionnement (1), et sont positionnées contre une butée et sont fixées axialement par une deuxième butée (55).

2. Dispositif d'actionnement selon la revendication 1,
**caractérisé en ce que**
les surfaces du piston (29 ; 31) sont disposées sur un piston commun (33).

3. Dispositif d'actionnement selon la revendication 1,
**caractérisé en ce que**
les deux espaces de travail (35 ; 37) sont disposés dans un cylindre commun (39).

4. Dispositif d'actionnement selon la revendication 3,
**caractérisé en ce que**
l'on associe aux deux espaces de travail (35 ; 37) au moins une soupape d'écoulement (25 ; 27).

5. Dispositif d'actionnement selon la revendication 4,
**caractérisé en ce que**
l'on associe à chacun des deux espaces de travail (35 ; 37) une soupape d'écoulement (25 ; 27) commandable séparément.

6. Dispositif d'actionnement selon la revendication 1,
**caractérisé en ce que**
l'on effectue une détection de la pression dans au moins l'un des deux espaces de travail.

7. Dispositif d'actionnement selon la revendication 1,
**caractérisé en ce que**
la course de la surface du piston (29 ; 31) pendant un mouvement de fonctionnement est détectée par un dispositif de détection de course (44).

8. Dispositif d'actionnement selon la revendication 1,
**caractérisé en ce qu'**
au moins l'un des espaces de travail (35 ; 37) est disposé de manière excentrée par rapport à un arbre de boîte de vitesses (17).

9. Dispositif d'actionnement selon la revendication 1,
**caractérisé en ce qu'**
au moins l'un des espaces de travail (35 ; 37) est disposé de manière concentrique par rapport à un arbre de boîte de vitesses (17).

10. Dispositif d'actionnement selon la revendication 1,
**caractérisé en ce que**
les leviers (11) sont précontraints par une force de ressort dans la direction de fermeture de l'embrayage (3).

11. Dispositif d'actionnement selon la revendication 10,
**caractérisé en ce que**
les leviers (11) sont réalisés sous forme de moyens de transfert sans force.

12. Dispositif d'actionnement selon la revendication 1,
**caractérisé en ce que**
la surface de retenue (55) est formée par une bague de fixation.
